# EUROPÄISCHE PATENTSCHRIFT

(11) **EP 3 188 080 B1**
(45) Veröffentlichungstag und Bekanntmachung des Hinweises auf die Patenterteilung: **14.06.2023**
(21) Anmeldenummer: 17150014.3
(22) Anmeldetag: 02.01.2017
(51) Int. Cl.: G06V 40/20, G06V 10/14, G06V 20/59, G06V 20/64, G06V 20/56

(54) **VERFAHREN ZUR AUSWERTUNG VON GESTEN**
METHOD FOR EVALUATING GESTURES
PROCÉDÉ D'ÉVALUATION DE GESTES

(30) Priorität: 04.01.2016 DE 102016100075
(43) Veröffentlichungstag der Anmeldung: 05.07.2017
(73) Patentinhaber: VOLKSWAGEN AKTIENGESELLSCHAFT, 38440 Wolfsburg (DE)
(72) Erfinder: Ette, Bernd, 38442 Wolfsburg (DE); Wintsche, Volker, 01099 Dresden (DE)
(74) Vertreter: 2SPL Patentanwälte PartG mbB

(56) Entgegenhaltungen:
- US-A1- 2013 204 457
- FENG-SHENG CHEN ET AL: "Hand gesture recognition using a real-time tracking method and hidden Markov models", IMAGE AND VISION COMPUTING, Bd. 21, Nr. 8, 1. August 2003 (2003-08-01) , Seiten 745-758, XP055159348, ISSN: 0262-8856, DOI: 10.1016/S0262-8856(03)00070-2
- HAN SANG-MAN ET AL: "A 413240-pixel sub-centimeter resolution Time-of-Flight CMOS image sensor with in-pixel background canceling using lateral-electric-field charge modulators", IEEE INTERNATIONAL SOLID STATE CIRCUITS CONFERENCE, IEEE SERVICE CENTER, NEW YORK, NY, US, 9. Februar 2014 (2014-02-09), Seiten 130-131, XP032575097, ISSN: 0193-6530, DOI: 10.1109/ISSCC.2014.6757368 ISBN: 978-1-4799-0918-6 [gefunden am 2014-03-05]
- HAN SANG-MAN ET AL: "A Time-of-Flight Range Image Sensor With Background Canceling Lock-in Pixels Based on Lateral Electric Field Charge Modulation", IEEE JOURNAL OF THE ELECTRON DEVICES SOCIETY, IEEE, USA, Bd. 3, Nr. 3, 1. Mai 2015 (2015-05-01), Seiten 267-275, XP011579294, DOI: 10.1109/JEDS.2014.2382689 [gefunden am 2015-04-22]
- C. Peter ET AL: "Time-of-Flight basiertes Handtracking als Bedienelement im Fahrzeuginnenraum" In: "Radikale Innovationen in der Mobilität", 24 December 2013 (2013-12-24), Springer Fachmedien Wiesbaden, Wiesbaden, XP055721767, ISBN: 978-3-658-03102-2 pages 243-251, DOI: 10.1007/978-3-658-03102-2_14,
- S Hussmann ET AL: "Chapter 11: A review on commercial solid state 3D cameras for machine vision applications" In: "Recent Advances in Topography Research", 1 January 2013 (2013-01-01), Nova Science Publishers Inc, XP055721773, ISBN: 978-1-62618-840-2 pages 303-351,
- Andreas Spickermann: "Photodetektoren und Auslesekonzepte für 3D-Time-of-Flight- Bildsensoren in 0,35 [mu]m-Standard-CMOS-Technologie (PhD thesis)", , 12 May 2010 (2010-05-12), XP055721777, Retrieved from the Internet: URL:https://duepublico2.uni-due.de/servlet s/MCRFileNodeServlet/duepublico_derivate_0 0024771/Spickermann_Andreas_Diss.pdf [retrieved on 2020-08-11]
- QUAN YUAN ET AL: "Automatic 2D Hand Tracking in Video Sequences", 2005 SEVENTH IEEE WORKSHOPS ON APPLICATIONS OF COMPUTER VISION (WACV/MOTION'05) - 5-7 JAN. 2005 - BRECKENRIDGE, CO, USA, IEEE, LOS ALAMITOS, CALIF., USA, 1 January 2005 (2005-01-01), pages 250-256, XP031059096, ISBN: 978-0-7695-2271-5

## Beschreibung

Die Erfindung betrifft ein Verfahren zur Auswertung von Gesten, ein Fahrzeug mit einem Sensor sowie ein Computer-Programmprodukt.

Bei Fahrzeugen wird vermehrt Wert darauf gelegt, die Bedienung, hier speziell das Betätigen eines Aktors wie einer Heckklappe, von außerhalb des Fahrzeugs zu erleichtern.

Bewegungen, speziell schnellere Bewegungen, sicher zu erkennen und als Gesten zu identifizieren ist nicht trivial und erfordert meist hohen Aufwand in der Sensorik und/oder Rechenleistung.

Unzureichende Bewegungsinformationen aus kapazitiven Sensoren mit einer Reichweite von etwa 20 cm erschweren die Detektion unterschiedlicher Bewegungsmuster in weiten Entfernungen, wenn zum Beispiel Entfernungen von bis zu zwei Metern betrachtet werden sollen.

Der Stromverbrauch von Gestik-Erkennungssystemen ist aufgrund der erforderlichen Rechenleistung zu hoch. Eine Öffnung, Schließung der Heckklappe erfolgt erst mit Verweildauer in einem Erfassungsbereich und gerichteter Bewegung eines einzelnen Objektes. Die Zeiten für das Verweilen des Fußes per Kick oder auch die Zeit in einem Spätbereich verlangsamen die Öffnung der Heckklappe.

Optische Systeme arbeiten mit reflektierenden Verfahren, so dass die Objekterkennung vom Reflektionsgrad der Füße oder des Beines abhängig ist. Daraus folgt, dass der Abstand Fuß zum Sensor stark abweichen kann. Einen Vektor aus den zeitlichen Bildern herauszurechnen erhöht die erforderliche Rechenleistung des vorhandenen Prozessors und somit steigen der Ruhestrom und die benötigte Rechenleistung des Prozessors unverhältnismäßig an.

DE 10 2008 052 928 A1 offenbart eine Vorrichtung zur Erkennung von Gesten in einem Bild umfassend einen Hough-Transformator, der ausgelegt ist, um Elemente in dem Bild oder in einer vorverarbeiteten Version des Bildes als identifizierte Gesten-Elemente zu identifizieren, die dann mit einer Datenbank verglichen werden.

DE 10 2011 082 881 A1 offenbart ein Verfahren zum Darstellen der Umgebung des Kraftfahrzeugs in einer bestimmten Ansicht in einem Kraftfahrzeug, bei dem räumliche Information, beispielsweise Tiefeninformation oder räumliche Koordinaten, in Bezug auf die aufgenommene Bildinformation bestimmt wird, beispielsweise mittels eines Stereo-Triangulationsverfahrens.

DE 10 2013 004 073 A1 offenbart ein Verfahren zur Erkennung von in Videoströmen erfassten Aktivitäten für eine Überwachung. Hierbei ist vorgesehen, dass für Framesequenzen in Feldern Daten zu Framedifferenzen akkumuliert werden, Gradienten und/oder Wertdifferenzabstände in den Akkumulatorfeldern bestimmt werden und aus den Gradienten auf Aktivität geschlossen wird.

FENG-SHENG CHEN ET AL: "Hand gesture recognition using a real-time tracking method and hidden Markov models", IMAGE AND VISION COMPUTING, Bd. 21, Nr. 8, 1. August 2003 Seiten 745-758, beschreibt ein Konzept zur Detektion einer Handgeste in Bilddaten.

HAN SANG-MAN ET AL: "A 413240-pixel sub-centimeter resolution Time-of-Flight CMOS image sensor with in-pixel background canceling using lateral-electric-field charge modulators", IEEE INTERNATIONAL SOLID STATE CIRCUITS CONFERENCE, IEEE SERVICE CENTER, NEW YORK, NY, US, 9. Februar 2014, Seiten 130-131, beschreibt eine Halbleiterstruktur zur Erfassung von Tiefeninformation (Time of Flight (ToF)).

HAN SANG-MAN ET AL: "A Time-of-Flight Range Image Sensor With Background Canceling Lock-in Pixels Based on Lateral Electric Field Charge Modulation", IEEE JOURNAL OF THE ELECTRON DEVICES SOCIETY, IEEE, USA, Bd. 3, Nr. 3, 1. Mai 2015 (2015-05-01), Seiten 267-275, offenbart ToF Sensoren zur Messung von Bilddaten mit Tiefeninformation.

Die US 2013/0204457 A1 beschreibt eine Gestensteuerung für ein Fahrzeug.

C. Peter ET AL: "Time-of-Flight basiertes Handtracking als Bedienelement im Fahrzeuginnenraum" In: "Radikale Innovationen in der Mobilität", 24. Dezember 2013 (2013-12-24), Springer Fachmedien Wiesbaden, lehrt eine robuste und gegen Störeinflüsse unempfindliche Time-of-Flight Technologie.

S Hussmann ET AL: "Chapter 11: A review on Commercial solid State 3D cameras for racine Vision applications", "Recent Advances in Topography Research", 1. Januar 2013, Nova Science Publishers Inc., XP055721773, ISBN: 978-1 -62618-840-2, Seiten 303-351, lehrt eine Auswahl der am besten geeigneten 3D-Kamems für eine bestimmte Anwendung. Andreas Spickermann: "Photodetektoren und Auslesekonzepte für 3D-Time-of-Flight-Bildsensoren in 0,35 [mu]m-Standard-CMOS-Technologie (PhD thesis)", 12. Mai 2010, XP055721777, lehrt den Einsatz hochdynamischen CMOS-Bildsensoren und effizienter Auslesemethoden zur Hintergrundlichtunterdrückung.

Quan Yuan: "Automatic 2D Hand Tracking in Video Sequences" Proceedings of the Seventh IEEE Workshop on Applications of Computer Vision (WACV/MOTION'05) 0-7695-2271-8/05 $ 20.00 IEEE, lehrt ein automatisches 2D-Handtracking in Videosequenzen. Der Erfindung liegt nun die Aufgabe zugrunde, die baulichen Anforderungen bei der Erkennung von Gesten zu senken.

Diese Aufgabe wird gelöst durch ein Verfahren gemäß Anspruch 1, ein Fahrzeug gemäß Anspruch 8 beziehungsweise ein Computerprogrammprodukt gemäß Anspruch 9.

Das erfindungsgemäße Verfahren zur Auswertung von Gesten, basierend auf Daten eines Sensors mit LDPD Dioden, umfasst die Schritte nach Anspruch 1.

Durch das sequentielle Messen, auch als 1 Tap (Abgriff) Verfahren bezeichnet, werden die Bewegungsartefakte bei höheren Geschwindigkeiten signifikant. Die Quantifizierung von Bewegungsartefakten kann somit zur Vektorberechnung der Bewegung und auch der Geschwindigkeit benutzt werden. Die Auswertung der Sensordaten kann durch die Umstellung auf 1 Tap Sequenz in hoher Genauigkeit Annäherungsdaten und Abstandinformationen und den Bewegungsvektor bei geringer Rechenleistung liefern.

Traditionell wird die Schaltung für 3 Taps in 3-facher Ausführung ausgeführt. Bei der hier vorgeschlagenen 1 Tap Lösung wird nur eine Schaltung benötigt. Die drei Dioden werden somit in einer Parallelschaltung betrieben und einem Kondensator zugeführt. Bedingt durch diese Parallelschaltung der Dioden, wird das Abbild des realen Bildes mit Restladungen der Bildsequenz versehen. Bei schnellen Bewegungen der Hand oder des Fußes wird also ein verschliffenes Bild dargestellt. Vergleichbar mit einem Mauszeiger erkennt man nun die Richtung, also einen Vektor, einer Bewegung.

Das erfindungsgemäße Verfahren hat den Vorteil, dass die Erkennung der Annäherung ohne die 3D-Informationen des Sensors vektorbasiert erfolgen kann. Somit ist weniger Rechenleistung des Prozessors erforderlich und der Ruhestrom sinkt. Aus der Auswertung der Quantifizierung von Bewegungsartefakten kann die Geschwindigkeitsinformation aus den Rändern und der Vektor aus den Pixelgrenzen errechnet werden. Durch die parallele Bewertung der Bewegungsartefakten beziehungsweise Filterung können trotz der hohen Bildrate genaue Bilder zur Objekterkennung erzeugt werden. Die Bewegungsartefakte können sowohl aus den 2D-Daten als auch aus den 3D-Daten gewonnen werden. Dabei muss vorteilhafterweise nicht der komplette Bildbereich weiterverarbeitet werden, sondern lediglich die erfassten Bewegungsartefakte, was den Rechenaufwand erheblich verringert.

Eine Quantifizierung von Bewegungsartefakten an den Rändern des bewegten Objekts kann für die Berechnung eines Bewegungsvektors verwendet werden. Im Rahmen einer Quantifizierung kann zum Beispiel ein dem Sensor nächstliegender Rand oder Punkt in jeder Messung, das heißt in jedem Bild oder Frame, verwendet werden. Die Verbindung dieser Ränder oder Punkte ergibt dann den Bewegungsvektor oder eine Bewegungstrajektorie.

Eine Quantifizierung von Bewegungsartefakten an den Rändern des bewegten Objekts kann für die Berechnung einer Annäherungsgeschwindigkeit des bewegten Objekts an den Sensor verwendet werden. Bei bekannter Bildrate, zum Beispiel zehn Bilder pro Sekunde, kann anhand von in den einzelnen Bildern ermittelter Ränder oder Punkte die Geschwindigkeit des Objekts bestimmt werden.

Nach einer Erkennung einer gerichteten Bewegung zu einem Gestenbereich kann ein Filter zur Reduzierung der Bewegungsartefakte eingeschaltet werden. Es kann sein, dass nach der Erkennung einer gerichteten Bewegung von einem Annäherungsmodus, in dem die Annäherung als solche und ihre Geschwindigkeit detektiert werden, in einen Gestenmodus, in dem Gesten gezielt erkannt werden sollen, umgeschaltet wird. In diesem Gestenmodus, der in einem relativ kleinen und nah bei dem Sensor, zum Beispiel circa fünf bis fünfzig Zentimeter, angeordneten Bereich ausgeführt wird, können dann übermäßige Bewegungsartefakte stören.

Die 3D-Daten können zur Erkennung eines ruhenden Objektes ausgewertet werden. Da bei ruhenden Objekten keine Bewegungsartefakte auftreten, wird in diesem Spezialfall auf die 3D-Messung umgeschaltet. Bei erneuter Bewegung kann wieder auf die 2D-Messung umgeschaltet werden.

Eine Auswertungsumschaltung kann bei Erkennung von schnellen Objekten von den 2D-Daten zu den 3D-Daten erfolgen. Hier werden die 2D-Daten beziehungsweise die 2D-Messung zu einer Abstandsmessung herangezogen, die eigentlich auf den 3D-Daten beziehungsweise der 3D-Messung basiert. Wenn nun die Objekte oder Bewegungen für die 2D-Messung zu schnell werden, wird dies erkannt und es kann auf die 3D-Messung umgestellt werden, um auch die schnellen Bewegungen korrekt zu erkennen.

Zusätzlich zu der Bewegungsdetektion anhand der 2D-Daten kann eine Bewegungsdetektion anhand der 3D-Daten erfolgen und die Ergebnisse können plausibilisiert werden. Diese Variante kann gewählt werden, wenn zum Beispiel besondere Anforderungen an die Genauigkeit der Messung oder die Erkennung von Gesten angelegt werden. Auch kann die parallele 2D- und 3D-Auswertung zur Kalibrierung oder das Training von Gesten und/oder Personen verwendet werden.

Es kann vorgesehen sein, dass nach einer detektierten Annäherung und/oder nach einer detektierten Geste ein Aktor betätigt wird. An die Betätigung eines Aktors werden meist hohe Sicherheitsanforderungen gestellt, die durch das hier vorgeschlagene Verfahren einfach und schnell erreicht werden.

Es kann weiter vorgesehen sein, dass der Sensor in einem Fahrzeug angeordnet ist und dass erst nach einer erfolgreichen Identifizierung einer die Annäherung und/oder die Geste ausführenden Person durch ein schlüsselloses Zugangsverfahren ein Aktor des Fahrzeugs betätigt wird. Dieser Anwendungsfall ist für das Verfahren besonders prädestiniert, da hier eine Vielzahl von möglichen Benutzern und Gesten auf Steuergeräte mit oftmals eher geringer Rechenleistung treffen.

Das erfindungsgemäße Fahrzeug umfasst einen Sensor mit LDPD Dioden und ein mit dem Sensor verbundenes Steuergerät, wobei das Steuergerät eingerichtet ist, ein zuvor beschriebenes Verfahren auszuführen. Es gelten die gleichen Vorteile und Modifikationen wie zuvor beschrieben.

Das erfindungsgemäße Computer-Programmprodukt umfasst Programmcode zur Durchführung des zuvor beschriebenen Verfahrens, wenn das Programmprodukt auf einer Recheneinheit oder einem Steuergerät eines Fahrzeugs ausgeführt wird. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar, sofern dies unter den Schutzumfang der angefügten Ansprüche fällt.

Die Erfindung wird nachfolgend in Ausführungsbeispielen anhand der zugehörigen Zeichnungen erläutert. Es zeigen:
- Figur 1: eine schematische Darstellung eines Fahrzeugs mit Sensor;
- Figur 2: ein schematische Darstellung von zwei Sensor-Datensätzen von einem ruhenden Objekt;
- Figur 3: ein schematische Darstellung von vier Sensor-Datensätzen von einem sich bewegenden Objekt;
- Figur 4: ein schematische Darstellung von vier zeitlich versetzten Sensor-Datensätzen von einem sich bewegenden Objekt; und
- Figur 5: ein Ablaufdiagramm einer Datenverarbeitung zur Auswertung von Gesten.

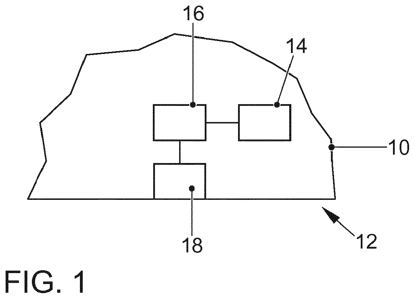

Figur 1 zeigt einen Bereich eines Fahrzeugs 10, wie zum Beispiel einen Ausschnitt eines hinteren Stoßfängers eines PKWs. Als Fahrzeuge werden weiterhin LKWs, Busse, Motorräder, Schienenfahrzeuge sowie Luft- und Wasserfahrzeuge angesehen.

Das Fahrzeug 10 umfasst eine Vorrichtung 12 zur Erkennung von Gesten. Die Vorrichtung 12 kann darüber hinaus ausgebildet sein zur externen Betätigung eines Aktors 14 des Fahrzeugs 10. Der Aktor 14 ist zum Beispiel ein Elektromotor zum Öffnen beziehungsweise Schließen einer Kofferraumklappe. Die Vorrichtung 12 umfasst weiter ein Steuergerät 16, das mit dem Aktor 14 direkt oder über weitere Elemente wie zum Beispiel weitere Steuergeräte in Verbindung steht. Weiterhin umfasst die Vorrichtung 12 einen Sensor 18 mit strahlungsempfindlichen, insbesondere lichtempfindlichen Dioden. Verwendet werden zum Beispiel Fotodioden, für Laser geeignete Fotodioden oder hier in diesem Beispiel LDPD Dioden (Lateral Drift-Field Photodetector Dioden).

Hier werden beispielsweise je drei LDPD (Lateral Drift-Field Photodetector Dioden) pro Pixel eingesetzt. Diese LDPD Dioden sind zum Beispiel in einer 30 mal 30 Matrixstruktur angeordnet. Werden drei LDPD pro Pixel verwendet, so hat man stets für die Berechnung des Abstandes ein zeitgleiches Abbild der Reflektion eines Pixels. Um die Empfindlichkeit eines Pixels zu erhöhen, werden die Messwerte Q1, Q2, Q3 sequentiell ausgelesen. Dies liefert höhere Werte, jedoch kommt es zu Restladungen die das Bild verzerren.

Der Sensor 20 beziehungsweise dessen Messwerte werden zur Erkennung von Gesten und zur Erkennung einer Annäherung eines Objekts, wie einer Person oder einer Hand oder eines Fußes einer Person verwendet. Eine Annäherung kann ebenfalls als eine Geste kategorisiert werden.

Die Bilddaten des Sensors 20 werden an das Steuergerät 16 übergeben, welches dann die Auswertung der Daten übernimmt. Je nach Auswertung, das heißt zum Beispiel einer erkannten Geste, wird der Aktor 14 über einen Steuerbefehl betätigt. So kann zum Beispiel ein Wischen einer Hand in eine Richtung einen Kofferraumdeckel schließen, während ein Wischen in die andere Richtung den Kofferraumdeckel öffnet.

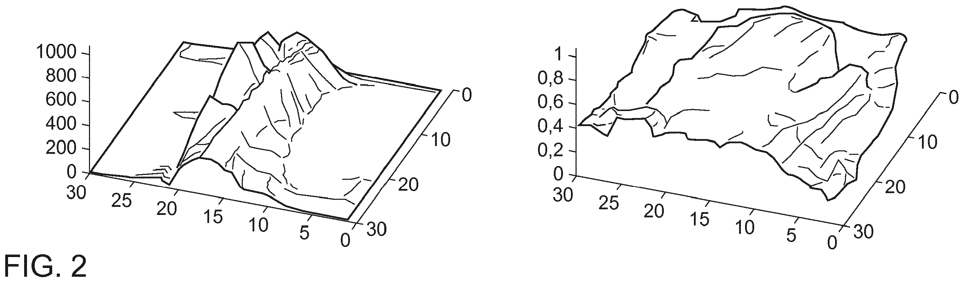

Figur 2 zeigt zwei Darstellungen von Messwerten des Sensors 18 für ein ruhendes, das heißt sich nicht bewegendes Objekt, hier einen Fuß. Links in Figur 2 sind die 2D-Daten des Sensors 18, das heißt die Reflektanzdaten, dargestellt. Die einzelnen Pixel oder Dioden sind in einer 30 mal 30 Matrix angeordnet, was an der x-Achse und y-Achse aufgetragen ist. An der z-Achse sind die Digits, also die Zählwerte, der jeweiligen Pixel aufgetragen. Die Reflektanzdaten bilden entsprechend der Reflektion von dem Fuß ein Abbild des Fußes ab. Links in Figur 2 sind die 3D-Daten des Sensors 18, das heißt die Abstandsdaten, dargestellt. Die einzelnen Pixel oder Dioden sind in einer 30 mal 30 Matrix angeordnet, was an der x-Achse und y-Achse aufgetragen ist. An der z-Achse sind die Digits, also die Zählwerte, der jeweiligen Pixel aufgetragen.

Da der Fuß steht, sind sowohl in den 2D-Daten als auch in den 3D-Daten des Sensors 18 keine Bewegungsartefakte vorhanden.

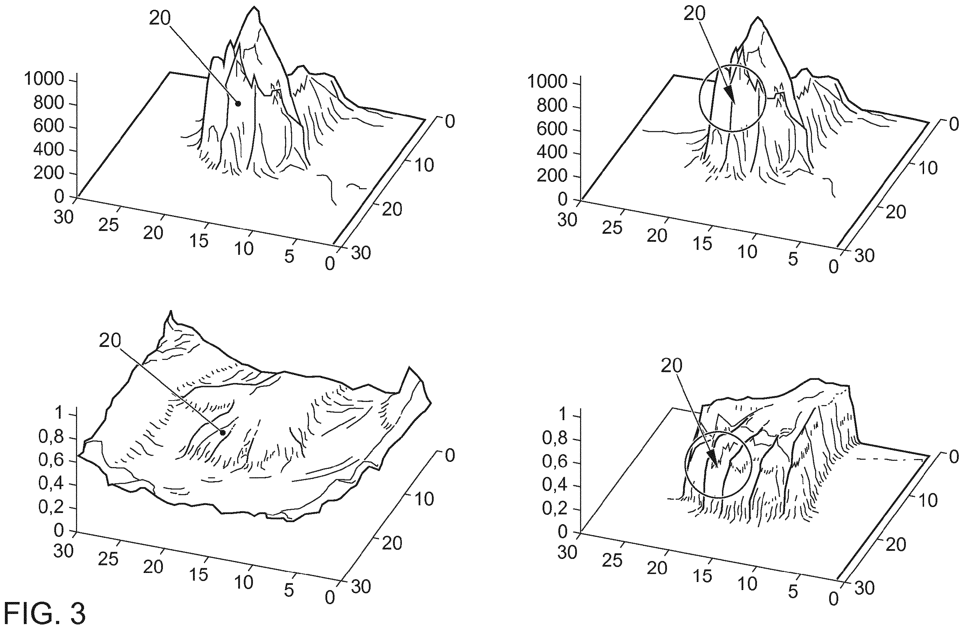

Figur 3 zeigt vier Darstellungen von vier Sensor-Datensätzen von einem sich bewegenden Objekt, in diesem Beispiel von einer sich bewegenden Hand, die eine Wischgeste ausführt. Die beiden oberen Darstellungen zeigen 2D-Daten des Sensors 18 und die beiden unteren Darstellungen zeigen 3D-Daten des Sensors 18. Die Achsen der Diagramme entsprechen den Achsen aus Figur 2.

Oben links sind die originalen, das heißt unbearbeiteten Daten dargestellt. Oben rechts sind die 2D-Daten bereinigt. In beiden Darstellungen sind Bewegungsartefakte 20, insbesondere im Bereich der Fingerspitzen, vorhanden.

Stärker sind die Bewegungsartefakte 20 bei den 3D-Daten ausgeprägt, diese befinden sich ebenfalls insbesondere im Bereich der Fingerspitzen. Links befinden sich wiederum die originalen 3D-Daten, während recht bearbeitete, hier segmentierte, 3D-Daten des Sensors 18 dargestellt sind.

Anhand dieser Bewegungsartefakte 20, die jeweils nur wenige Pixel umfassen, kann ein Objekt wie zum Beispiel ein Fuß oder eine Hand charakterisiert werden. Dies erleichtert die Bildbearbeitung beziehungsweise Bildverarbeitung, die in dem Steuergerät 16 oder einer anderen Recheneinheit ausgeführt wird. Dies spart Rechenzeit beziehungsweise erhöht die Verarbeitungsgeschwindigkeit.

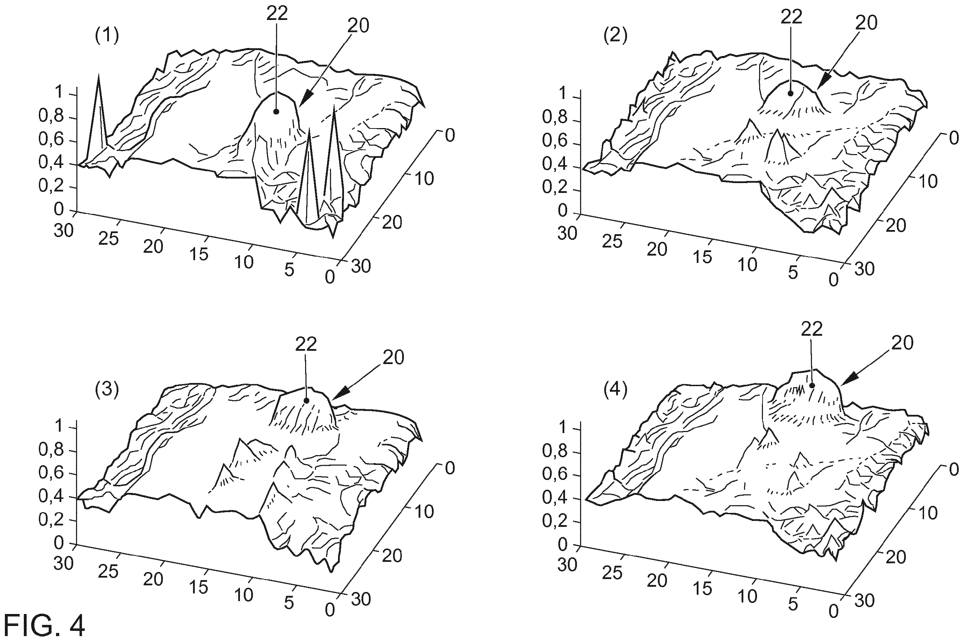

Figur 4 zeigt nun eine zeitliche Abfolge von 3D-Daten des Sensors 18. Die mit (1) bezeichnete Darstellung oben links ist der zeitlich erste 3D-Datensatz, es folgen die mit (2), (3) und (4) bezeichneten 3D-Datensätze. Die Achsen der Diagramme entsprechen den Achsen aus den Figuren 2 oder 3. Hier werden 3D-Datensätze verwendet, ohne jedoch die die 3D-Informationen des Sensors 18 zu verarbeiten. Die 3D-Datensätze werden hier dargestellt, da sie die Bewegungsartefakte 20 deutlicher zeigen. 2D-Datensätze des Sensors 18 können ebenso verwendet werden.

Die Darstellungen (1) bis (4) zeigen ein sich bewegendes Objekt am Beispiel eines Fußes bei Annäherung an den Sensor 18. In allen vier Bildern sind Bewegungsartefakte 20 zu sehen, die sich an einem in Bewegungsrichtung vorderen Rand des Objekts befinden. Dieser Rand oder diese Kante ist dabei dem Sensor 18 zugewandt. Schon aus zeitlichen Abfolge der Bewegungsartefakte 20 kann die Richtung der Bewegung erkannt werden. Bei bekannter Bildrate, die in dem Steuergerät 16 gemessen oder von dem Sensor 18 an das Steuergerät 16 ausgegeben werden kann, kann auch die Geschwindigkeit des Objekts berechnet werden.

Durch eine Quantifizierung der Bewegungsartefakte an den Rändern des bewegten Objekts können die Berechnungen für die Bewegung oder einen Bewegungsvektor beziehungsweise der Annäherungsgeschwindigkeit des bewegten Objekts an den Sensor nochmals vereinfacht werden.

Dazu wird für jeden Datensatz beziehungsweise für jedes Bewegungsartefakt 20 in dem Datensatz ein Quantisierungspunkt 22 berechnet. Der Quantisierungspunkt 22 ist in diesem Beispiel der Punkt mit dem geringsten Abstand zu dem Sensor 18. Andere Berechnungen für den Quantisierungspunkt 22 sind ebenfalls möglich, wie zum Beispiel der Flächenschwerpunkt des Bewegungsartefaktes 20 oder der höchste Wert des Bewegungsartefaktes 20.

Wie in der Abfolge der vier Darstellungen (1) bis (4) zu sehen ist, bewegt sich der Quantisierungspunkt 22 auf den Sensor 18 zu. Die Koordinaten dieser vier Quantisierungspunkte 22 können als Werte für einen Bewegungsvektor verwendet werden. Mit bekannter Bildrate kann auch die Geschwindigkeit des Objekts auf Basis der Quantisierungspunkte 22 berechnet werden. Diese Reduktion auf die Quantisierungspunkt 22 bei der Berechnung der Bewegung und/oder der Geschwindigkeit des Objekts vereinfacht die Berechnung erheblich, da nicht der komplette Bildbereich weiterverarbeitet werden muss.

Das Arbeitsprinzip einer Annäherungserkennung einer Person an ein Fahrzeug 10 könnte zum Beispiel wie folgt aussehen. Zunächst wird überprüft, ob die Person an dem Sensor 18 oder Fahrzeug 10 vorbeigeht oder zielgerichtet auf den Sensor 18 oder das Fahrzeug 10 zugeht. Dies geschieht wie oben beschrieben anhand der Bewegungsartefakte 20 und/oder der Quantisierungspunkte 22.

Wird eine Annäherung festgestellt, wird durch ein schlüsselloses Zugangsverfahren die Berechtigung der sich nähernden Person zum Beispiel zum Öffnen des Fahrzeugs 10 untersucht. Erst nach einer erfolgreichen Identifizierung einer die Annäherung und/oder die Geste ausführenden Person läuft das Verfahren weiter.

In einem nächsten Schritt kann ein Auswertebereich des Sensors 18 oder der Schritte je nach Umgebungsbedingungen wie blockierenden Objekten, zum Beispiel anderen parkenden Fahrzeugen, oder der ermittelten Schrittgeschwindigkeit angepasst werden.

Wenn die Person sich weiter auf den Sensor 18 oder Fahrzeug 10 zubewegt, wird zum Beispiel eine optische Rückmeldung in Form eines angezeigten Gestenbereichs, in dem eine Geste erfasst und verarbeitet wird, gegeben. Dann kann die Person gezielte Gesten ausführen, die wie oben beschrieben anhand der Bewegungsartefakte 20 und/oder der Quantisierungspunkte 22 ausgewertet werden.

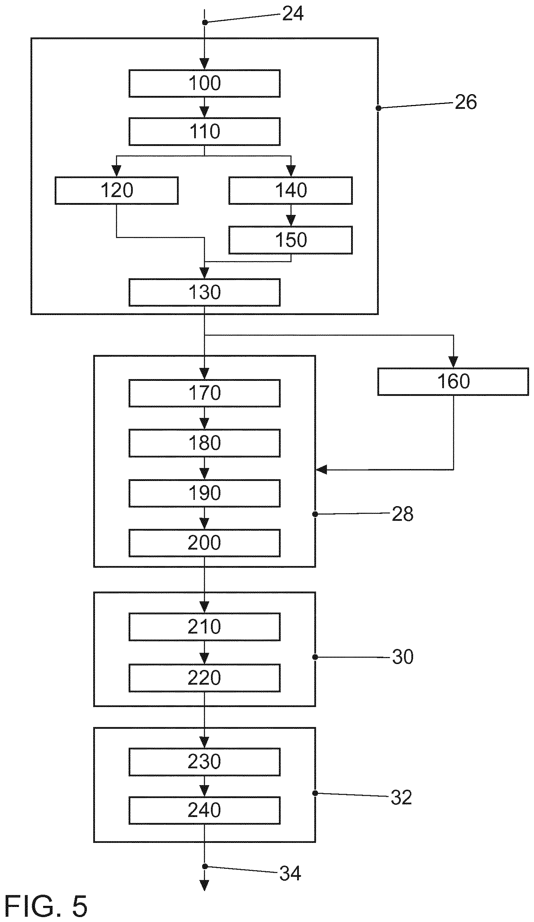

Anhand von Figur 5 wird im Folgenden ein Ablaufdiagramm einer Datenverarbeitung zur Auswertung von Gesten beschrieben. Das in dem Ablaufdiagramm dargestellte Verfahren wird hier in dem Steuergerät 16 ausgeführt.

Ein Eingangssignal 24 wird von dem Sensor 18 empfangen und zunächst einem Block Signalaufbereitung 26 zugeführt. Dort wird das Eingangssignal 24 aufbereitet und es wird eine Objektsegmentierung durchgeführt.

In einem ersten Schritt 100 wird eine Hintergrundbereinigung durchgeführt, um die Datenmenge zu reduzieren und die Auswertung zu vereinfachen.

In einem Schritt 110 wird eine 2D-Bewegungsdetektion durchgeführt, indem die reflektiven Daten gefiltert werden. Die 2D-Bewegungsdetektion wird wie oben beschrieben anhand der Bewegungsartefakte 20 und/oder der Quantisierungspunkte 22 durchgeführt. Anschließend verzweigt der Ablauf in zwei parallel ausgeführte Auswertungen.

In einem ersten parallelen Schritt 120 wird eine Beseitigung von Bewegungsartefakten vorgenommen, um die Erkennung von Objekten und Gesten zu verbessern.

In einem Schritt 130 wird eine 3D-Bewegungsdetektion, das heißt eine Abstandsmessung, durchgeführt, um auch bei statischen Daten oder Bildern den Abstand zu dem Sensor 18 zu ermitteln.

In einem zweiten parallel ausgeführten Auswertung wird in einem Schritt 140 die Quantifizierung von Bewegungsartefakten ausgeführt, wie oben beschrieben wurde.

In einem Schritt 150 wird die Segmentierung des 3D-Objekts durchgeführt, was zu einem verbesserten Datenverarbeitung führt.

Die in dem Schritt 130 durchgeführte 3D-Bewegungsdetektion kann entweder klassisch ablaufen, das heißt es wird das ganze Bild verarbeitet, was der Fall ist, wenn der Schritt 120 gewählt wurde. Andererseits oder auch parallel kann die 3D-Bewegungsdetektion durch Verarbeitung lediglich der Bewegungsartefakte 20 und/oder der Quantisierungspunkte 22 durchgeführt werden, was der Fall ist, wenn die Schritte 140 und 150 gewählt wurden.

In einem Schritt 160 wird die Annäherungserkennung aktiviert, dies geschieht in Abhängigkeit von den Auswertungen der ermittelten Richtung und/oder der ermittelten Geschwindigkeit des sich annähernden Objekts. Wird die Annäherungserkennung nicht aktiviert, zum Beispiel weil ein Passant an dem Fahrzeug nur vorbeigegangen ist, wird zum Anfang des Verfahrens zurückverzweigt oder die Beobachtung ausgesetzt oder abgebrochen.

Bei aktivierter Annäherungserkennung wird ein Block Merkmalsextraktion 28 aufgerufen, in den das Ausgangssignal des Blocks Signalaufbereitung 26 geführt wird.

In einem Schritt 170 wird ein 2D-Bewegungstracking durchgeführt, indem die Bewegungsartefakte 20 und/oder die Quantisierungspunkte 22 aus den 2D-Daten über die zeitliche Abfolge der Bilder oder Frames des Sensors 18 verfolgt werden. Damit kann detektiert werden, dass die Schrittfolge der sich annähernden Person weiter fortgeführt wird. Wo die Schrittfolge endet oder welcher Abstand vorliegt, kann hier nicht ermittelt werden.

In einem Schritt 180 wird ein 3D-Bewegungstracking durchgeführt, zum Beispiel indem die Bewegungsartefakte 20 und/oder die Quantisierungspunkte 22 aus den 3D-Daten über die zeitliche Abfolge der Bilder oder Frames des Sensors 18 verfolgt werden.

In einem Schritt 190 wird eine Abstandsmessung des Objekts oder der Objekte durchgeführt. Damit kann der Abstand des Objekts zum Sensor 18 genau bestimmt werden.

In einem Schritt 200 findet eine Merkmalsextraktion von segmentierten Objekten statt, bei der fremde Objekte, das heißt die hier nicht betrachtet werden sollen, aus dem Bild oder den Daten extrahiert werden, um die Auswertung und Berechnung zu vereinfachen.

Danach läuft das Verfahren zu einem Block Ereignisdetektion 30, in dem die extrahierten Merkmale untersucht werden.

In einem Schritt 210 findet eine Überprüfung von Merkmalen auf Ereignisse statt. Untersucht wird zum Beispiel das Tracking, in welche Richtung bewegt sich der Schwerpunkt, Bewegungsartefakt 20 und/oder der Quantisierungspunkt 22? Daraufhin kann als Ereignis eine Annäherung des Objekts oder ein Vorbeigehen des Objekts an dem Sensor 18 festgestellt werden. Auch bestimmte Bewegungsmuster wie Wischgesten oder Fußstellungen können Ereignisse sein.

In einem Schritt 220 wird die Generierung eines Merkmalvektors vorgenommen. Dies kann zum Beispiel ein Vektor sein, eine zeitliche Abfolge von Bewegungsartefakten 20 und/oder Quantisierungspunkten 22 oder eine Bewegung von links nach rechts umfasst.

Danach tritt das Verfahren in einem Block Ereignis- und Gestenklassifizierung 32 ein., wo die Ereignisse mit Gesten abgeglichen werden.

In einem Schritt 230 wird eine Klassifikation von Gesten vorgenommen, das heißt es wird festgelegt beziehungsweise überprüft, welche Gesten überhaupt vorhanden oder zugelassen sind.

In einem Schritt 240 findet eine Nachbearbeitung der Klassifikation statt. Dort wird aus der Klassifikation ein Ausgangssignal 34 erzeugt, zum Beispiel in einer Ausgabe als Bitmuster. Das Ausgangssignal wird an das Fahrzeug 10 ausgegeben, zum Beispiel direkt zu dem Aktor 14, der dann die Bewegung ausführt, welche der detektierten Geste entspricht.

Bei dem hier vorgestellten Verfahren muss vorteilhafterweise nicht der komplette Bildbereich der Sensordaten weiterverarbeitet werden, sondern lediglich die erfassten Bewegungsartefakte 20 und/oder die erfassten Quantisierungspunkte 22, was den Rechenaufwand erheblich verringert.

### Bezugszeichenliste

- 10: Fahrzeug
- 12: Vorrichtung
- 14: Aktor
- 16: Steuergerät
- 18: Sensor
- 20: Bewegungsartefakt
- 22: Quantisierungspunkt
- 24: Eingangssignal
- 26: Signalaufbereitung
- 28: Merkmalsextraktion
- 30: Ereignisdetektion
- 32: Ereignis- und Gestenklassifizierung
- 34: Ausgangssignal
- 100: Schritt
- 110: Schritt
- 120: Schritt
- 130: Schritt
- 140: Schritt
- 150: Schritt
- 160: Schritt
- 170: Schritt
- 180: Schritt
- 190: Schritt
- 200: Schritt
- 210: Schritt
- 220: Schritt
- 230: Schritt
- 240: Schritt

## Patentansprüche

1. Verfahren zur Auswertung von Gesten, basierend auf Daten eines Sensors (18) mit Lateral-Drift-Feld, LDPD, Dioden, mit den Schritten:
- Sequentielles Messen durch den Sensor (18) zur Erfassung einer Geste, durch Messung von erstens Fremdlicht zur Erfassung von 2D-Daten in Form von Reflektanzdaten, zweitens Laserlicht zur Erfassung von 3D-Daten in Form von Abstandsdaten und drittens Restlicht;
- Erfassen von Bewegungsartefakten (20) in den 2D-Daten und/oder den 3D-Daten, welche bei bewegten Objekten durch Restladungen hervorgerufen wurden;
- Detektieren einer Bewegung durch Verarbeitung nur der Bewegungsartefakte (20); und
- Auswerten der detektierten Bewegung in Bezug auf mögliche Gesten;
dass eine Quantifizierung von Bewegungsartefakten (20) an den Rändern des bewegten Objekts für die Berechnung eines Bewegungsvektors verwendet wird, und/oder für die Berechnung einer Annäherungsgeschwindigkeit des bewegten Objekts an den Sensor (18) verwendet wird;
wobei die Quantifizierung einen Quantisierungspunkt (22) berechnet, der dem Flächenschwerpunkt des Bewegungsartefaktes (20) oder dem höchsten Wert des Bewegungsartefaktes (20) entspricht;
wobei die Berechnung des Bewegungsvektors und/oder der Annäherungsgeschwindigkeit auf dem Quantisierungspunkt (22) basiert.

2. Verfahren nach einem der vorhergehenden Ansprüche, **dadurch gekennzeichnet, dass** nach einer Erkennung einer gerichteten Bewegung zu einem Gestenbereich ein Filter zur Reduzierung der Bewegungsartefakte (20) eingeschaltet wird.

3. Verfahren nach einem der vorhergehenden Ansprüche, **dadurch gekennzeichnet, dass** die 3D-Daten zur Erkennung eines ruhenden Objektes ausgewertet werden.

4. Verfahren nach einem der vorhergehenden Ansprüche, **dadurch gekennzeichnet, dass** eine Auswertungsumschaltung bei Erkennung von schnellen Objekten von den 2D-Daten zu den 3D-Daten erfolgt.

5. Verfahren nach einem der vorhergehenden Ansprüche, **dadurch gekennzeichnet, dass** zusätzlich zu der Bewegungsdetektion anhand der 2D-Daten eine Bewegungsdetektion anhand der 3D-Daten erfolgt und die Ergebnisse plausibilisiert werden.

6. Verfahren nach einem der vorhergehenden Ansprüche, **dadurch gekennzeichnet, dass** nach einer detektierten Annäherung und/oder nach einer detektierten Geste ein Aktor (14) betätigt wird.

7. Verfahren nach Anspruch 6, **dadurch gekennzeichnet, dass** der Sensor (18) in einem Fahrzeug (10) angeordnet ist und dass erst nach einer erfolgreichen Identifizierung einer die Annäherung und/oder die Geste ausführenden Person durch ein schlüsselloses Zugangsverfahren ein Aktor (14) des Fahrzeugs (10) betätigt wird.

8. Fahrzeug mit einem Sensor (18) mit Lateral-Drift-Feld, LDPD, Dioden und einem mit dem Sensor (18) verbundenen Steuergerät (16), **dadurch gekennzeichnet, dass** das Steuergerät (16) eingerichtet ist, ein Verfahren nach einem der Ansprüche 1 bis 7 auszuführen.

9. Computer-Programmprodukt mit Programmcode zur Durchführung des Verfahrens nach einem der Ansprüche 1 bis 7, wenn das Programmprodukt auf einer Recheneinheit oder einem Steuergerät (16) eines Fahrzeugs (10) ausgeführt wird.

## Claims

1. Method for evaluating gestures based on data of a sensor (18) having lateral drift field diodes (LDPDs), comprising the following steps:
- sequential measurement by the sensor (18) in order to detect a gesture, firstly by measuring extraneous light in order to detect 2D data in the form of reflectance data, secondly by measuring laser light in order to detect 3D data in the form of distance data, and thirdly by measuring residual light;
- detecting motion artifacts (20) in the 2D data and/or the 3D data which have been caused by residual charges in the case of moving objects;
- detecting a movement by processing only the motion artifacts (20); and
- evaluating the detected movement with respect to possible gestures;
in that a quantification of motion artifacts (20) at the edges of the moving object is used for the calculation of a motion vector, and/or for the calculation of an approach speed of the moving object toward the sensor (18);
wherein the quantification calculates a quantization point (22) which corresponds to the centroid of the motion artifact (20) or the highest value of the motion artifact (20);
wherein the calculation of the movement vector and/or of the approach speed is based on the quantization point (22).

2. Method according to any of the preceding claims, **characterized in that** after detection of a directed movement to a gesture region, a filter for reducing the motion artifacts (20) is switched on.

3. Method according to any of the preceding claims, **characterized in that** the 3D data are evaluated in order to detect a stationary object.

4. Method according to any of the preceding claims, **characterized in that** evaluation switching from the 2D data to the 3D data takes place when fast objects are detected.

5. Method according to any of the preceding claims, **characterized in that** in addition to the movement detection on the basis of the 2D data, movement detection is carried out on the basis of the 3D data and the results checked for plausibility.

6. Method according to any of the preceding claims, **characterized in that** after a detected approach and/or after a detected gesture, an actuator (14) is actuated.

7. Method according to claim 6, **characterized in that** the sensor (18) is arranged in a vehicle (10) and **in that** an actuator (14) of the vehicle (10) is actuated only after a successful identification by a keyless access method of a person performing the approach and/or the gesture.

8. Vehicle having a sensor (18) with lateral drift field diodes (LDPDs) and a control device (16) connected to the sensor (18), **characterized in that** the control device (16) is configured to carry out a method according to any of claims 1 to 7.

9. Computer program product having a program code for implementing the method according to any of claims 1 to 7 if the program product is carried out on a computing unit or a control device (16) of a vehicle (10).

## Revendications

1. Procédé permettant l'évaluation de gestes, sur la base de données d'un capteur (18) comportant des diodes à champ de dérive latéral, LDPD, comportant les étapes de :
- mesure séquentielle par le capteur (18) pour la détection d'un geste, en mesurant premièrement de la lumière parasite pour la détection de données 2D sous forme de données de réflectance, deuxièmement de la lumière laser pour la détection de données 3D sous forme de données de distance et troisièmement de la lumière résiduelle ;
- détection d'artefacts de mouvement (20) dans les données 2D et/ou les données 3D qui ont été provoqués par des charges résiduelles dans des objets en mouvement ;
- détection d'un mouvement en traitant seulement les artefacts de mouvement (20) ; et
- évaluation du mouvement détecté par rapport à des gestes possibles ;
**en ce qu**'une quantification d'artefacts de mouvement (20) sur les bords de l'objet en mouvement est utilisée pour le calcul d'un vecteur de mouvement et/ou est utilisée pour le calcul d'une vitesse d'approche de l'objet en mouvement vers le capteur (18) ;
dans lequel la quantification calcule un point de quantification (22) qui correspond au centre de gravité de surface de l'artefact de mouvement (20) ou à la valeur la plus élevée de l'artefact de mouvement (20) ;
dans lequel le calcul du vecteur de mouvement et/ou de la vitesse d'approche est basé sur le point de quantification (22).

2. Procédé selon l'une quelconque des revendications précédentes, **caractérisé en ce qu'**après une reconnaissance d'un mouvement dirigé vers une zone de gestes, un filtre est activé pour la réduction des artefacts de mouvement (20).

3. Procédé selon l'une quelconque des revendications précédentes, **caractérisé en ce que** les données 3D sont évaluées pour la reconnaissance d'un objet au repos.

4. Procédé selon l'une quelconque des revendications précédentes, **caractérisé en ce qu'**une commutation d'évaluation est effectuée, lors de la reconnaissance d'objets rapides, des données 2D vers les données 3D.

5. Procédé selon l'une quelconque des revendications précédentes, **caractérisé en ce qu'**en plus de la détection de mouvement à l'aide des données 2D, une détection de mouvement à l'aide des données 3D est effectuée et les résultats sont rendus plausibles.

6. Procédé selon l'une quelconque des revendications précédentes, **caractérisé en ce qu'**un actionneur (14) est actionné après une approximation détectée et/ou après un geste détecté.

7. Procédé selon la revendication 6, **caractérisé en ce que** le capteur (18) est disposé dans un véhicule (10) **et en ce qu'**un actionneur (14) du véhicule (10) est actionné seulement après une identification réussie d'une personne exécutant l'approche et/ou le geste par un procédé d'accès sans clé.

8. Véhicule comportant un capteur (18) comportant des diodes à champ de dérive latéral, LDPD, et un appareil de commande (16) connecté au capteur (18), **caractérisé en ce que** l'appareil de commande (16) est configuré pour exécuter un procédé selon l'une des revendications 1 à 7.

9. Produit programme informatique comportant un code de programme pour la réalisation du procédé selon l'une des revendications 1 à 7, lorsque le produit programme est exécuté sur une unité de calcul ou un appareil de commande (16) d'un véhicule (10).
